Europäisches Patentamt

European Patent Office

Office européen des brevets

(19)

(11) Publication number: **0 188 033 B1**

# EUROPEAN PATENT SPECIFICATION

(45) Date of publication of patent specification: **31.07.91**   (51) Int. Cl.⁵: **A46D 3/08**, B65G 47/90

(21) Application number: **85202135.1**

(22) Date of filing: **24.12.85**

(54) Loading arrangement for placing brush bodies from a supply into a brush-body holder.

(30) Priority: **07.01.85 BE 2060588**

(43) Date of publication of application:
**23.07.86 Bulletin 86/30**

(45) Publication of the grant of the patent:
**31.07.91 Bulletin 91/31**

(84) Designated Contracting States:
**DE GB IT**

(56) References cited:
**EP-A- 0 021 464**
**EP-A- 0 043 059**
**EP-A- 0 078 570**

(73) Proprietor: **G.B. BOUCHERIE, N.V.**
**Stuivenbergstraat 104-141**
**B-8700 Izegem(BE)**

(72) Inventor: **Boucherie, Leonel**
**Potaardestraat 3**
**B-8810 Roeselare-Rumbeke(BE)**

(74) Representative: **Donné, Eddy**
**M.F.J.Bockstael Arenbergstraat 13**
**B-2000 Anvers(BE)**

Rank Xerox (UK) Business Services

## Description

The present application relates to a transfer device for taking tooth-brush bodies from a sorted supply and placing them into a brush body holder.

A transfer device of this kind is required for taking tooth-brush bodies one by one from the sorted supply and carrying them away therefrom to place each brush body into a work holder of a brush-making machine.

In a conventional tooth-brush making machine the transfer device for taking tooth-brush bodies from the sorted supply and placing them into the brush body holder mainly consists of a magazine mounted perpendicularly above the drum-shaped work holder. The tooth-brush bodies are stacked in the magazine, the undermost brush body resting on the drum-shaped work holder. The work holder is indexed to successively present individual brush bodies to a filling tool. After each angular indexing of the work holder an empty brush body clamp is presented to the bottom of the magazine so that the undermost tooth brush body from the magazine is received in the brush body clamp. The magazine is filled from the top with tooth-brush bodies which drop from the sorting device into the magazine. Other types of transfer devices for tooth-brush bodies in a tooth-brush making machine are provided with a sliding shoot between the sorting device and the vertically extending magazine.

These transfer devices suffer from various drawbacks. A first major drawback is that the tooth brush bodies may accidentally turn upside down during the transport from the sorting device to the bottom of the vertically extending magazine with the result that they are gripped between the brush clamps with an inappropriate orientation. Accidental turning of the tooth-brush bodies upside down is more likely to occur when these have rounded portions, particularly if they have a more or less rounded cross-section. In order to avoid any malfunction of the brush making machine in the event a brush body is presented with an inappropriate orientation, elaborate and intricate detection and safety systems are required.

In addition, the vertically extending magazines used in conventional tooth-brush making machines have to be adapted in shape to the particular models of tooth-brush bodies used.

EP-O 021 464 A1 shows a device for transferring brush bodies from a rotary brush body holder to a processing station where the brush bristles are cut and rounded at their ends after the brush-body has been filled with bristles in the brush body holder by means of a reciprocating filling tool. The transfer device is equipped with a gripping mechanism consisting of a gripper body and two gripping fingers movably mounted on the gripper body. The gripper body is moved with respect to a stationary frame with a combined rotary and translational movement.

EP-A-O 078 570 shows a device for orienting tooth-brush bodies on the periphery of a rotary drum. The device comprises a gripping mechanism with pivotally mounted gripping fingers for gripping individual tooth-brush bodies and rotating them through 180° about an axis which is perpendicular to the longitudinal axis of the tooth-brush body.

The present invention provides a transfer device for taking tooth-brush bodies from a sorted supply and placing them into brush-body holder, comprising a frame, a gripping mechanism consisting of a gripper body, at least two gripping arms movably mounted on the gripper body and a drive means for moving the arms between a gripping position and a release position, and comprising means for moving the gripper body with respect to the frame. According to a first aspect of the invention, the means for moving the gripper body with respect to the frame comprise:

- an intermediate element carrying slidably a first guide means extending along a first axis, said gripper body being movable with said first guide means,
- a second guide means carried slidably by the frame and extending along a second axis substantially perpendicular to the first axis, said intermediate element being movable with said second guide means, and
- means for driving the gripper body with the first guide means and the intermediate element with the second guide means, such that the gripper body can perform mutually perpendicular movements to effect the transfer of tooth-brush bodies from the sorted supply to the brush body holder.

According to a second aspect of the invention, the means for moving the gripper body with respect to the frame comprise:

- an intermediate element carrying slidably a first guide means extending along a first axis, said gripper body being movable with said first guide, and
- a conveyor belt provided with clamps having movable jaws for gripping tooth-brush bodies from the sorted supply, said clamps moving along a second axis perpendicular to said first axis.

In the transfer device of the present invention according to its first aspect the individual tooth-brush bodies are directly transferred from the sorted supply to the brush body holder; in the transfer device according to the second aspect of the invention, individual tooth-brush bodies are conveyed by the conveyor belt from the sorted supply to the gripping mechanism where they are gripped and transferred to the brush body holder. Any gap accidentally occurring in the sorting operation can thus be caught up so that no processing cycle in the brush making process is wasted.

In order to better demonstrate the features of the present invention, some preferred embodiments are described hereinafter by way of example without limiting them thereto with reference to the accompanying drawings wherein:

Figure 1 represents a schematic view of a first embodiment of the invention wherein a single gripper is used;

Figure 2 represents a second embodiment of the invention wherein two grippers are used;

Figure 3 represents a variant of Figure 2; and

Figure 4 represents a schematic view of a further embodiment of a transfer device according to the invention, wherein the gripping means are fixed to a conveyor belt.

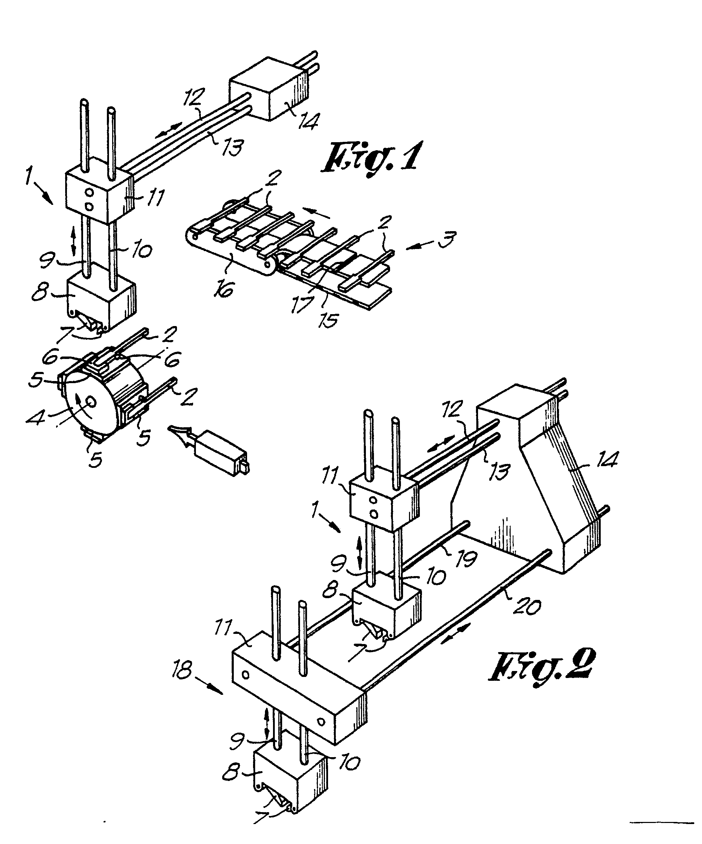

In the first embodiment of the invention as represented in Figure 1 a transfer device consists of a gripping mechanism 1 taking care that toothbrush bodies 2 are taken away from a sorted supply 3 one after another and in a positive way are transferred to a workholder, which in Figure 1 consists of a stepwise angularly rotatable drum 4 which at its periphery is provided with four brush body holders 5, each of which is provided with brush body clamps 6.

The gripping mechanism 1 consists of two gripping arms 7 which are movably fixed to a gripper body 8, said gripper body 8 being allowed by means of guiding rods 9-10 to move vertically with respect to an intermediate element 11 which in its turn can move horizontally via the guiding rods 12 and 13, respectively, with respect to a part of frame 14 of a brush-making machine, in such a way that the gripping mechanism 1 can perform mutually perpendicular movements for realizing the above-mentioned transfer of the tooth-brush bodies 2.

The driving and controlling of the gripping mechanism 1 can be achieved in different ways with known pneumatic or electromagnetic means, not represented in the figure.

For example, the gripper body 8 and the intermediate element 11 can be moved by means of pneumatic cylinders, while the gripping arms 7 can be driven electromagnetically.

In Figure 1 the possibility is also being represented for providing an intermediate magazine 16 between the end station 15 of a sorting device and the gripping mechanism 1, whereby it is possible to compensate for gaps 17 in the sorting operation, so that no cycle whatever is carried out uselessly by the gripping mechanism 1. As represented in Figure 1, said intermediate magazine 16 may consist of a suitably controlled conveyor belt.

It is clear that the use of such an intermediate magazine 16 is closely related to the nature of the end station 15 of the sorting device and that it is not always necessary to provide such an intermediate magazine 16.

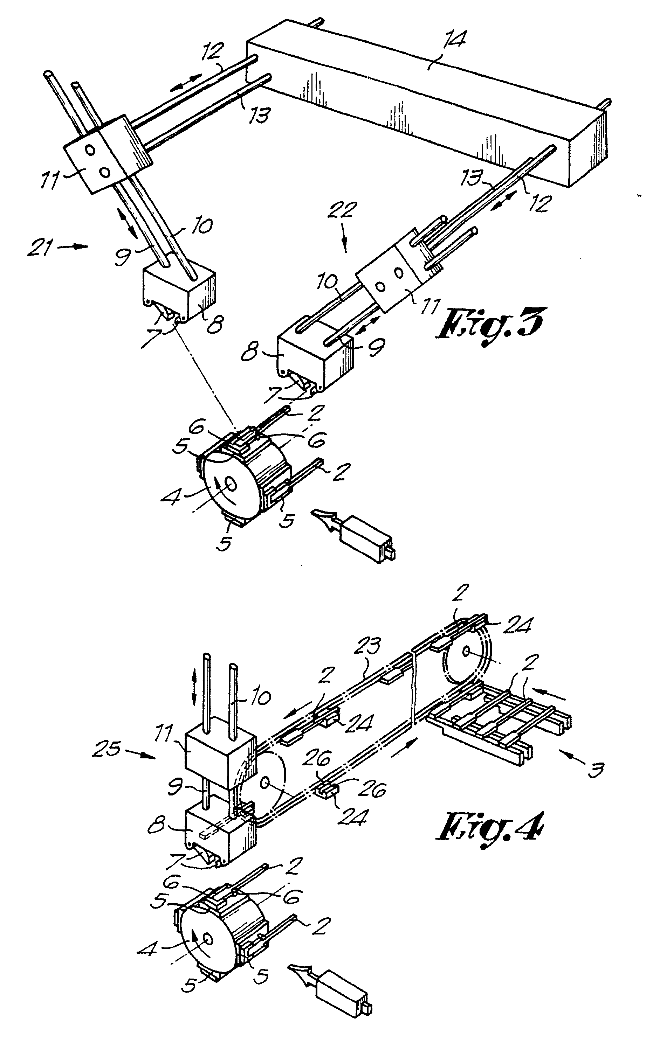

In order to raise the rate of transfer of the brush bodies 2, a plurality of gripping means exerting an interaction with respect to one another can be provided as represented in Figures 2 and 3.

In Figure 2 gripping means are represented that consist of the gripping mechanism 1 of Figure 1 and a second gripping mechanism 18 that is almost identical to said first one.

Said second gripping mechanism 18 is provided with horizontal guiding rods 19 and 20 in such a way that the gripper body 8 of the first gripping mechanism 1 can move between these rods during its upward and downward movement.

Figure 3 represents an alternative embodiment according to which two gripping mechanisms 21 and 22 are disposed radially. Obviously, several of such gripping mechanisms can be applied if that would appear to be necessary.

In yet another embodiment of the transfer device illustrated in Figure 4 a conveyor belt 23 is provided with clamps 24 for gripping the toothbrush bodies and associated with a gripping mechanism 25, similar to those of Figures 1-3.

In operation of this embodiment the tooth-brush bodies at the supply 3 are gripped by means of the clamps 24 and then are brought to drum 4 by means of the conveyor belt, whereafter the brush bodies 2 are taken over by the gripping mechanism 25 from the clamps 24 and are brought between the brush body clamps 6 of the brush body holder 5 by means of the gripping mechanism 25.

It is clear that the gripping action of clamps 24 can be obtained in different ways, but in the most simple embodiment will be achieved by means of the clamping force of springs not represented in the figure which press both jaws 26 of the abovesaid clamps 24 towards each other; opening of the clamps 24 can be simply achieved by providing fixed cams located at suitable places along the conveyor belt 23, said cams being able to force apart the jaws with respect to one another.

The clamps 24 can be attached to a conveyor belt in different ways known per se. They can rotate either at the ends of the conveyor belt 23, or always be kept horizontally.

## Claims

1. Transfer device for taking tooth-brush bodies (2) from a sorted supply (3) and placing them into a brush body holder (5), comprising a frame (14), a gripping mechanism (1) consisting of a gripper body (8), at least two gripping arms (7) movably mounted on said gripper body, and a drive means for moving said arms (7) between a gripping position and a release position, and comprising means for moving said gripper body with respect to said frame, characterized in that said means for moving the gripper body with respect to the frame comprise:

- an intermediate element (11) carrying slidably a first guide means (9, 10) extending along a first axis, said gripper body (8) being movable with said first guide means (9, 10),
- a second guide means (12, 13) carried slidably by the frame (14) and extending along a second axis substantially perpendicular to the first axis, said intermediate element (11) being movable with said second guide means (12, 13), and
- means for driving the gripper body (8) with the first guide means (9, 10) and the intermediate element with the second guide means (12, 13), such that the gripper body (8) can perform mutually perpendicular movements to effect the transfer of tooth-brush bodies (2) from the sorted supply (3) to the brush body holder.

2. Transfer device according to claim 1, characterized in that it further comprises a second gripping mechanism (18; 22) consisting of a second gripper body (8'), of movable gripping arms (7') mounted on said second gripper body and of drive means for moving said arms between a gripping position and a release position, the transfer device further comprising means for moving the second gripper body (8') with respect to the frame, which means comprise:

- a second intermediate element (11') carrying slidably a third guide means (9', 10') extending along a third axis parallel to said first axis, said second gripper body (8') being movable with said third guide means (9', 10'),
- a fourth guide means (12', 13'; 19, 20) carried slidably by the frame (14) and extending along a fourth axis substantially perpendicular to the third axis, said second intermediate element (11') being movable with said fourth guide means (12', 13'; 19, 20), and
- means for driving the second gripper body (8') with the third guide means (9', 10') and the second intermediate element with the fourth guide means (12', 13'; 19, 20), such that the second gripper body (8') can perform mutually perpendicular movements to also effect the transfer of tooth-brush bodies (2) from the sorted supply (3) to the brush body holder (5) in alternation with the first gripper body (8).

3. Transfer device according to claim 2, characterized in that the second and fourth axes are radially disposed with respect to each other.

4. Transfer device for taking tooth-brush bodies (2) from a sorted supply (3) and placing them into a brush body holder (5), comprising a frame (14), a first gripping mechanism (1) consisting of a gripper body (8), at least two gripping arms (7) movably mounted on said gripper body, a drive means for moving said arms (7) between a gripping position and a release position, and comprising means for moving said gripper body with respect to said frame, characterized in that said means for moving the gripper body with respect to the frame comprise:

- an intermediate element (11) carrying slidably a first guide means (9, 10) extending along a first axis, said gripper body (8) being movable with said first guide (9, 10), and
- a conveyor belt (23) provided with clamps (24) having movable jaws (26) for gripping tooth-brush bodies (2) from the sorted supply (3), said clamps (24) moving along a second axis perpendicular to said first axis.

5. Transfer device according to claim 4, characterized in that the jaws (26) of said clamps (24) are spring biased towards each other and that fixed cams are provided at predetermined places along the conveyor belt (23) for forcing said jaws (26) apart with respect to one another.

**Revendications**

1. Dispositif de transfert destiné à retirer des corps de brosses à dents (2) d'un approvisionnement rangé (3) et à les placer dans un support (5) de corps de brosses, comprenant un bâti (14), un mécanisme de préhension (1) constitué par un corps de serrage (8), par au moins deux bras (7) destinés à cet effet et montés en mobilité sur le corps de serrage, et par un moyen d'entraînement destiné à faire passer les bras (7) d'une position de serrage à une position de relâchement, le dispositif de transfert comprenant des moyens destinés à déplacer le corps de serrage par rapport au bâti, **caractérisé en ce que** le moyen destiné à déplacer le corps de serrage par rapport au bâti comprend :

- un élément intermédiaire (11) portant en coulissement un premier moyen de guidage (9, 10) qui s'étend le long d'un premier axe, le corps de serrage (8) étant apte à se déplacer avec le premier moyen de guidage (9, 10) ;

- un deuxième moyen de guidage (12, 13) supporté en coulissement par le bâti (14) et s'étendant le long d'un second axe essentiellement perpendiculaire au premier, l'élément intermédiaire (11) étant apte à se déplacer avec le deuxième moyen de guidage (12, 13);et

- un moyen destiné à entraîner le corps de serrage (8) avec le premier moyen de guidage (9, 10) et l'élément intermédiaire avec le deuxième moyen de guidage (12, 13), de telle sorte que le corps de serrage (8) puisse effectuer des mouvements mutuellement perpendiculaires dans le but de mettre en oeuvre le transfert des corps (2) de brosses à dents, à partir de l'approvisionnement rangé (3) en direction du support de corps de brosses.

2. Dispositif de transfert selon la revendication 1, **caractérisé en ce qu**'il comprend, en outre, un second mécanisme de préhension (18 ; 22) constitué par un second corps de serrage (8'), par des bras mobiles (7') destinés à cet effet, montés sur le second corps de serrage, et par un moyen d'entraînement destiné à faire passer les bras d'une position de serrage à une position de relâchement, le dispositif de transfert comprenant, en outre, un moyen destiné à déplacer le second corps de serrage (8') par rapport au bâti, ce moyen comprenant :

- un second élément intermédiaire (11') supportant, en coulissement, un troisième moyen de guidage (9', 10') qui s'étend le long d'un troisième axe parallèle au premier axe, le second corps de serrage (8') étant apte à se déplacer avec le troisième moyen de guidage (9', 10') ;

- un quatrième moyen de guidage (12', 13' ; 19, 20) supporté en coulissement par le bâti (14) et s'étendant le long d'un quatrième axe essentiellement perpendiculaire au troisième, le second élément intermédiaire (11') étant apte à se déplacer avec le quatrième moyen de guidage (12', 13' ; 19, 20) ; et

- un moyen destiné à entraîner le second corps de serrage (8') avec le troisième moyen de guidage (9', 10') et le second élément intermédiaire avec le quatrième moyen de guidage (12', 13' ; 19, 20), de telle sorte que le second corps de serrage (8') puisse effectuer des mouvements mutuellement perpendiculaires dans le but de mettre également en oeuvre le transfert des corps (2) de brosses à dents, à partir de l'approvisionnement rangé (3) en direction du support de corps de brosses (5), en alternance avec le premier corps de serrage (8).

3. Dispositif de transfert selon la revendication 2, **caractérisé en ce que** les deuxième et quatrième axes sont disposés en position radiale l'un par rapport à l'autre.

4. Dispositif de transfert destiné à retirer des corps (2) de brosses à dents d'un approvisionnement rangé (3) et à les placer dans un support (5) de corps de brosses, comprenant un bâti (14), un premier mécanisme de préhension (1) constitué par un corps de serrage (8), par au moins deux bras (7) destinés à cet effet et montés en mobilité sur le corps de serrage, et par un moyen d'entraînement destiné à faire passer les bras (7) d'une position de serrage à une position de relâchement, le dispositif de transfert comprenant un moyen destiné à déplacer le corps de serrage par rapport au bâti, **caractérisé en ce que** le moyen destiné à déplacer le corps de serrage par rapport au bâti comprend :

- un élément intermédiaire (11) supportant en coulissement un premier moyen de guidage (9, 10) qui s'étend le long d'un premier axe, le corps de serrage (8) étant apte à se déplacer avec le premier moyen de guidage (9, 10) ; et

- une courroie transporteuse (23) munie de pinces (24) à mâchoires mobiles (26) destinées à saisir les corps (2) de brosses à dents à partir de l'approvisionnement rangé (3), les pinces (24) se déplaçant le long d'un second axe perpendiculaire au premier.

5. Dispositif de transfert selon la revendication 4, **caractérisé en ce que** les mâchoires (26) des pinces (24) sont placées en état de précontrainte à l'aide d'un ressort, l'une par rapport à l'autre, et **en ce qu**'on procure des cames fixes à des endroits prédéterminés le long de la courroie transporteuse (23), dans le but de forcer les mâchoires (26) à l'écart l'une de l'autre.

## Patentansprüche

1. Ubertragungsvorrichtung für Zahnbürstenkörper (2) von einer geordneten Zufuhr (3) und Zustellung dieser Zahnbürstenkörper an einen Bürstenkörperhalter (5), die einen Gestell (14), einen Aufgreifmechanismus (1), bestehend aus einem Greifkörper (8), wenigstens zwei, beweglich auf besagtem Greifkörper montierten, Greifarmen (7) und einem Antriebsmittel für besagte Arme (7) zwischen einer Aufgreifstellung und einer Freigabestellung und die Mittel zum Bewegen besagtes Greifkörpers in bezug auf besagten Gestell enthält, dadurch gekennzeichnet, dass besagte Mittel zum Bewegen des Greifkörpers dem Gestell gegenüber nachfolgende Teile enthalten:
   - ein Zwischenelement (11), das ein erstes Führungsmittel (9, 10) gleitend trägt, und sich einer ersten Achse entlang erstreckt, wobei besagter Greifkörper (8) mit Hilfe dieses besagten Führungsmittels (9, 10) beweglich ist,
   - ein zweites Führungsmittel (12, 13), das vom Gestell (14) gleitend getragen wird und sich einer zweiten Achse entlang wesentlich senkrecht zur ersten Achse erstreckt, wobei besagtes Zwischenelement (11) mit Hilfe des zweiten Führungsmittels (12, 13) beweglich ist, und
   - Mittel zum Antrieb des Greifkörpers (8) mit dem ersten Führungsmittel (9, 10) und des Zwischenelements mit dem zweiten Führungsmittel (12, 13) derart, dass der Greifkörper (8) gegenseitige Bewegungen ausführen kann um die Ubertragung der Zahnbürstenkörper (2) von der geordneten Zufuhr (3) zum Bürstenkörperhalter auszuführen.

2. Ubertragungsvorrichtung nach Anspruch 1, dadurch gekennzeichnet, dass es weiter einen zweiten Aufgreifmechanismus (18, 22) enthält, bestehend aus einem zweiten Greifkörper (8'), beweglichen, auf besagtem zweiten Greifkörper montierten Greifarmen (7') und Antriebsmitteln um besagte Arme zwischen einer Aufgreifposition und einer Freigabeposition, wobei die Ubertragungsvorrichtung weitere Mittel zum Bewegen des zweiten Greifkörpers (8') dem Gestell enthält, welche Mittel nachfolgende Teile enthalten:
   - ein zweites Zwischenelement (11') das ein drittes Führungsmittel (9', 10') gleitend trägt und sich einer dritten Achse, parallel zu besagter ersten Achse, entlang erstreckt, wobei besagter zweite Greifkörper (8') mit Hilfe dieses besagten dritten Führungsmittels (9', 10') beweglich ist,
   - ein viertes Führungsmittel (12', 13'; 19, 20), das vom Gestell (14) gleitend getragen wird und sich einer vierten Achse, wesentlich senkrecht zur dritten Achse, entlang erstreckt, wobei besagtes zweites Zwischenelement (11') mit Hilfe des vierten Führungsmittels (12', 13'; 19, 20) beweglich ist, und
   - Mittel zum Antrieb des zweiten Greifkörpers (8') mit dem dritten Führungsmittel (9', 10') und des zweiten Zwischenelements mit dem vierten Führungsmittel (12', 13'; 19, 20) derart, dass der zweiten Greifkörper (8') gegenseitig senkrechte Bewegungen ausführen kann um ebenfalls die Ubertragung der Zahnbürstenkörper (2) von der geordneten Zufuhr (3) zum Bürstenkörperhalter (8) auszuführen.

3. Ubertragungsvorrichtung nach Anspruch 2, dadurch gekennzeichnet, dass die zweite und vierte Achse gegenseitig radial angeordnet sind.

4. Ubertragungsvorrichtung für Zahnbürstenkörper (2) von einer geordneten Zufuhr (3) und Zustellung dieser Zahnbürstenkörper an einen Bürstenkörperhalter (5), die einen Gestell (14), einen ersten Aufgreifmechanismus (1), bestehend aus einem Greifkörper (8), wenigstens zwei, beweglich auf besagtem Greifkörper montierten, Greifarmen (7) und ein Antriebsmittel für besagte Arme (7) zwischen einer Aufgreifstellung und einer Freigabestellung und die Mittel zum Bewegen besagtes Greifkörpers besagtem Gestell gegenüber enthält, dadurch gekennzeichnet, dass besagte Mittel zum Bewegen des Greifkörpers dem Gestell gegenüber nachfolgende Teile enthalten:
   - ein Zwischenelement (11), das das erste Führungsmittel (9, 10) gleitend trägt, und sich einer ersten Achse entlang erstreckt, wobei besagter Greifkörper (8) mit Hilfe dieses besagten Führungsmittels (9, 10) beweglich ist, und
   - ein Transportband (23), das mit Klemmen (24) versehen ist, die mit bewegliche Spannbacken (26) versehen ist um die Zahnbürstenkörper von der geordneten Zufuhr (3) aufzugreifen, wobei besagte Klemmen (24) sich einer zweiten Achse, senkrecht zu besagter erster Achse, entlang bewegen.

5.   Ubertragungsvorrichtung nach Anspruch 4, dadurch gekennzeichnet, dass die Spannbacken (26) der besagten Klemmen (24) durch Federdruck zusammengedrückt werden und dass feste Nockenn auf vorherbestimmten Stellen das Transportband (23) entlang vorgesehen sind um besagte Spannbacken gegenseitig auseinanderzudrücken.

Fig.1

Fig.2

EP 0 188 033 B1

*Fig.3*

*Fig.4*